# FASCICULE DE BREVET EUROPEEN

(11) **EP 3 044 579 B1**
(45) Date de publication et mention de la délivrance du brevet: **28.04.2021**
(21) Numéro de dépôt: 14790004.7
(22) Date de dépôt: 09.09.2014
(51) Int. Cl.: G01N 29/04, G01N 29/22, G01N 29/265

(54) **DISPOSITIF DE CONTROLE DE SOUDURE METALLIQUE, SYSTEME ET PROCEDE ASSOCIES**
SCHWEISSNAHTPRÜFVORRICHTUNG SOWIE ZUGEHÖRIGES SYSTEM UND VERFAHREN
METAL WELD INSPECTION DEVICE, ASSOCIATED SYSTEM AND METHOD

(30) Priorité: 10.09.2013 FR 1302107
(43) Date de publication de la demande: 20.07.2016
(73) Titulaire: Thales, 92400 Courbevoie (FR); Sonaxis S.A., 25000 Besancon (FR)
(72) Inventeur: CENDRAS, Michel, F-06101 Cannes La Bocca (FR); PIERRE, Guillaume, F-25000 Besancon (FR); CROZAT, Sophie, F-25000 Besancon (FR); BEY, Stéphane, F-25000 Besancon (FR)
(74) Mandataire: Marks & Clerk France
(86) Numéro de dépôt international: PCT/EP2014/069227
(87) Numéro de publication internationale: WO 2015/036407

(56) Documents cités:
- CA-A1- 2 545 285
- JP-A- 2011 058 980
- US-A1- 2009 025 490
- US-A1- 2010 224 001
- R. Long ET AL: "THROUGH-WELD ULTRASONIC PHASED ARRAY INSPECTION USING FULL MATRIX CAPTURE", AIP Conference Proceedings, vol. 29, 1 January 2010 (2010-01-01), pages 918-925, XP55147387, ISSN: 0094-243X, DOI: 10.1063/1.3362524

## Description

La présente invention concerne le domaine du contrôle non destructif des soudures métalliques. La présente invention concerne plus particulièrement un dispositif de contrôle de soudure métallique, un système et un procédé associés.

La technique de soudage est couramment utilisée pour réaliser la jonction de nombreux éléments métalliques comme par exemple des tubes métallique. Le soudage métallique peut entraîner différents types de défauts comme par exemple, des problèmes de fissures, des manques de pénétration, des manques de recouvrement, des problèmes de rochage, d'oxydation ou des inclusions gazeuses (soufflures). Dans certains domaines d'application, comme par exemple et de façon non limitative le domaine aéronautique ou aérospatial, la qualité et la fiabilité de la soudure doivent être réalisées avec la plus grande garantie possible. Dans ce contexte, il est intéressant de proposer une solution permettant de contrôler l'intégrité des soudures réalisées sur un tube métallique.

Traditionnellement le contrôle des soudures est réalisé par radiologie, par rayons X ou γ, cependant, cette méthode comporte de nombreux inconvénients. Un premier inconvénient vient du matériel de contrôle. En effet, le système est lourd et encombrant. Lors de la radiographie, les contraintes imposées par la radioprotection sont très importantes ; le matériel à inspecter doit être transporté dans une cabine dédiée ou on doit procéder à l'évacuation du personnel dans une zone conséquente. Une fois la radiographie réalisée, l'interprétation des résultats de l'inspection nécessite d'attendre le développement des films radio. Au niveau de l'interprétation des résultats, la localisation des défauts sur la périphérie des tubes est difficile. De plus, la détection de défauts de type critique est dépendante de l'orientation dudit défaut.

Il existe des dispositifs utilisant une méthode de contrôle par ultrasons pour vérifier l'intégrité de soudures réalisées sur des tubes de grandes dimensions par exemple dans le domaine gazier ou pétrolier mais ces dispositifs sont difficilement transposables dans l'industrie aéronautique.

Un but de l'invention est notamment de corriger au moins certains inconvénients de l'art antérieur en proposant notamment un dispositif portable et un système de contrôle de soudure métallique ainsi qu'un procédé permettant la détection, la quantification et localisation d'éventuels défauts internes à une soudure métallique de manière à statuer sur la conformité de cette dernière.

A cet effet, l'invention a pour objet un dispositif portable de contrôle de soudure de tubes métalliques de petit diamètre tel que revendiqué dans la revendication 1. Suivant un mode de réalisation, les éléments de la sonde sont configurés pour émettre des faisceaux ultrasons orientés selon un angle différent de 90° par rapport à un axe passant par le centre des deux parties latérales du logement sensiblement circulaire d'une pince.
Suivant un mode de réalisation, les éléments de deux sondes ultrasons sont alignées selon deux axes orientés de façon à ce que lesdits axes ne soient pas symétrique par rapport à un axe passant par le centre des deux parties latérales du logement sensiblement circulaire d'une pince.
Suivant un mode de réalisation, chaque élément des sondes ultrasons sont commandables individuellement.
Suivant un mode de réalisation, le moyen configuré pour entraîner en rotation les sondes ultrasons est un moyen manuel.
Suivant un mode de réalisation, le moyen configuré pour entraîner en rotation les sondes ultrasons est un moyen motorisé.

L'invention a également pour objet, un système de contrôle de soudure de tubes métalliques comprenant un dispositif de contrôle de soudure de tubes métalliques comme défini précédemment, une unité de traitement et une unité de visualisation, ladite unité de traitement étant configurée pour émettre des signaux en direction de chaque sonde ultrasons dudit dispositif de contrôle de soudure de façon à commander chaque élément desdites sondes et recevoir des signaux proportionnels aux échos reçus par chaque élément desdites sondes, l'unité de visualisation étant configurée pour représenter les signaux reçus des sondes après traitement sous forme d'images en fonction de la position angulaire d'au moins une sonde sur ladite unité de visualisation.
Selon un mode de réalisation, l'unité de traitement est programmée pour transmettre, à chaque élément des sondes, des signaux de commutation de façon à alimenter séquentiellement un groupe d'éléments adjacents afin de balayer linéairement la largeur du cordon de soudure à contrôler.
Selon un mode de réalisation, l'unité de traitement est configurée pour transmettre, à chaque élément des sondes, des signaux de commande avec une loi de retard de façon à dévier électroniquement le faisceau ultrason émis par lesdites sondes.
Selon un mode de réalisation, l'unité de traitement est configurée pour transmettre, à chaque élément des sondes, un signal proportionnel à l'intensité du faisceau ultrasons à émettre par lesdites sondes.
Un autre objet de l'invention est un procédé de contrôle de soudure de tubes métalliques mettant en œuvre le système de contrôle de soudure précédemment décrit comprenant :
- Une étape d'enduction des sondes de gel couplant,
- Une étape de positionnement du dispositif de contrôle sur le tube, au niveau de la soudure à contrôler de façon à aligner les sondes sur ladite soudure,
- Une étape d'acquisition, dans une zone mémoire de l'unité de traitement, du signal représentatif de la position angulaire initiale d'au moins une sonde,
- Une étape de mise en rotation des sondes autour de la soudure à contrôler et, à intervalle régulier, de mesure et d'enregistrement simultané, dans une zone mémoire de l'unité de traitement, du signal représentatif de la position angulaire d'au moins une sonde et du signal représentatif des échos captés par les éléments des sondes,
- Une étape d'affichage, sur l'unité de visualisation, d'images représentatives des signaux reçus par les éléments des sondes en fonction de la position angulaire de ces dernières.

D'autres particularités et avantages de la présente invention apparaîtront plus clairement à la lecture de la description ci-après, donnée à titre illustratif et non limitatif, et faite en référence aux dessins annexés, dans lesquels :
- La figure 1 représente un exemple de mode de réalisation préféré d'un dispositif de contrôle selon l'invention,
- La figure 2 représente un exemple de réalisation de sondes ultrasons,
- La figure 3 représente un exemple de variante de réalisation du dispositif de contrôle de soudure,
- La figure 4 représente des vues de sabot de sonde ultrasons,
- La figure 5 représente un exemple de mode de réalisation du système de contrôle de soudure selon l'invention.

Il convient de noter que, par la suite, l'utilisation des termes ^{«} *traducteur ultrason* ^{»} ou ^{«} *élément de sonde ultrasons* ^{»} désigne tout élément qui convertit une onde ultrasonore en un signal électrique et inversement.

La présente invention concerne le contrôle de soudure métallique par ultrasons. Le dispositif et le système selon l'invention sont adaptés pour contrôler des soudures réalisées sur des tubes métalliques de petit diamètre couramment utilisés par exemple dans les domaines aéronautiques ou astronautiques. Par tube de petit diamètre on entend des tubes de diamètre inférieur à un pouce soit environ 25,4 millimètres.

Dans ces domaines, les métaux couramment utilisés sont, par exemple et de façon non limitative, le titane, l'acier inoxydable, les aciers spéciaux. De même les techniques de soudage couramment réalisées sont par exemple le soudage TIG pour ^{«} *Tungsten Inert Gas^{»}*, le soudage par faisceaux d'électrons ou par friction.

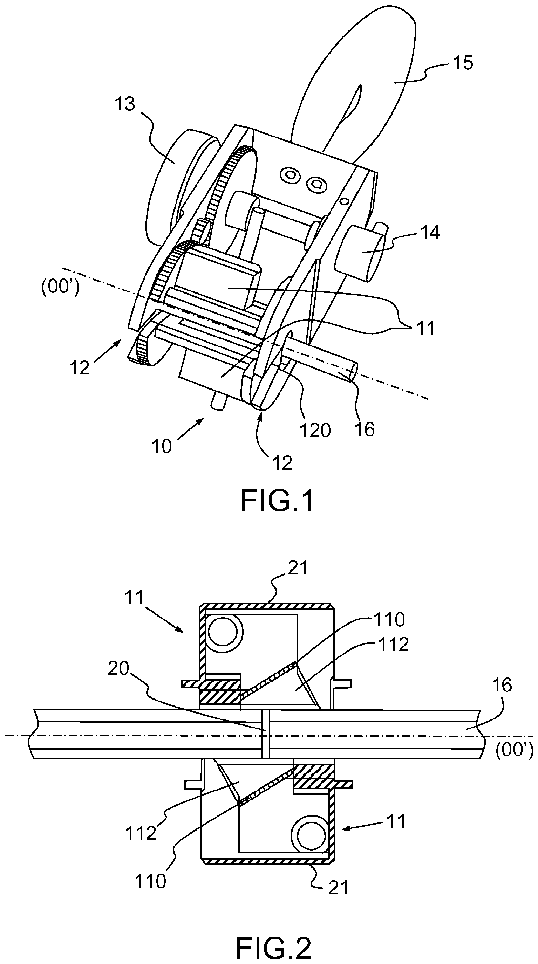

La figure 1 représente un exemple de mode de réalisation préféré d'un dispositif 10 portable de contrôle de soudure 20 de tube métallique 16 de petit diamètre selon l'invention.

Suivant un mode de réalisation, le dispositif 10 comprend au moins deux sondes ultrasons 11 multiéléments, au moins une pince 12, un moyen 13 configuré pour entraîner en rotation les sondes ultrasons 11 autour de la périphérie du cordon de soudure 20 à contrôler et un capteur angulaire 14.

Suivant un mode de réalisation, le dispositif 10 portable peut comprendre une poignée de maintien 15.

La pince 12 du dispositif 10 peut être formée de deux mors destinés à enserrer le tube 16 dont la soudure est à contrôler de façon à maintenir ledit dispositif 10 de contrôle sur ledit tube 16.

La pince 12 possède, au niveau de chacun de ces mors, un évidement en arc de cercle définissant, une fois la pince 12 fermée, un logement 120 sensiblement circulaire adapté pour recevoir un tube 16 dont le cordon de soudure 20 est à contrôler.

Suivant l'invention la pince 12 du dispositif 10 est formée par le groupe comprenant au moins deux sondes 11 multiéléments pour former des mors destinés à enserrer un tube 16 dont la soudure est à contrôler.

Chaque élément 110 des sondes 11 peut posséder une base en arc de cercle de façon à épouser la forme du tube 16 dont la soudure est à vérifier. Ainsi, la pince, une fois fermée, définit un logement 120 sensiblement circulaire adapté pour recevoir un tube 16 dont le cordon de soudure 20 est à contrôler.

Suivant un mode de réalisation, les sondes 11 peuvent être maintenues plaquées sur le tube 16 dont le cordon de soudure est à vérifier par un ressort de rappel.

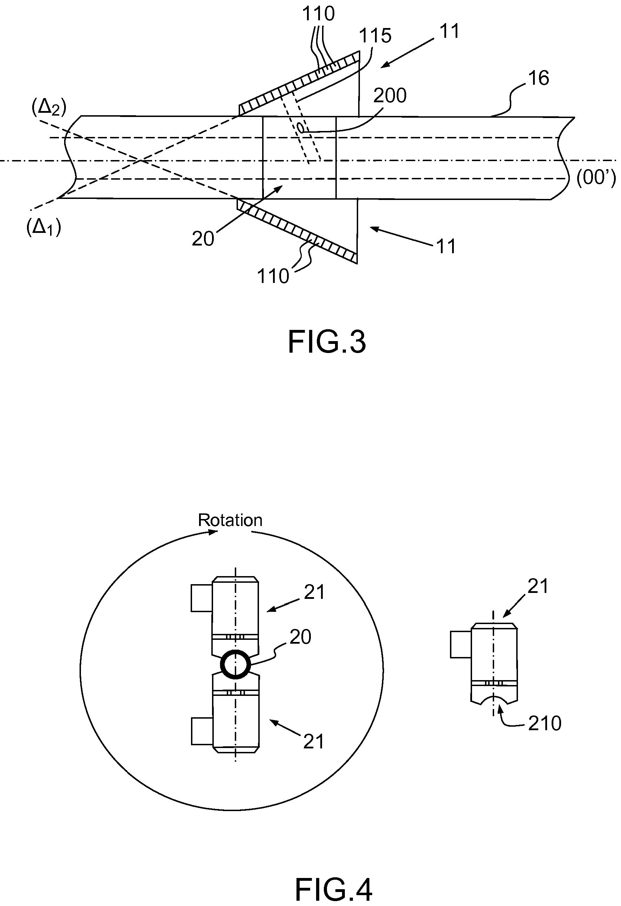

Les sondes ultrasons 11 sont montées mobiles par rapport au dispositif 10 de contrôle et mobile en rotation par rapport à un axe (O, O') passant par le centre des deux parties latérales du logement 120 sensiblement circulaire de la pinces 12. Cette possibilité de rotation permet aux sondes 12 ultrasons de parcourir toute la périphérie du cordon de soudure 20 à contrôler sans avoir à déplacer le dispositif 10 de contrôle. Comme illustré figure 4, chaque sonde 11 peut parcourir un tour complet autour du cordon de soudure 20.

Les sondes 11 peuvent être montées dans un support aussi appelé sabot 21. Afin de minimiser l'espace entre la sonde et le tube dont la soudure est à vérifier, le sabot 21 peut comporter un évidement 210 en arc de cercle comme illustré figure 4.

Chaque élément 110 des sondes peut posséder une base en arc de cercle de façon à épouser la forme du sabot 21. Comme vu précédemment ceci permet d'épouser la forme du tube 16 dont la soudure est à vérifier. De façon avantageuse, la forme en arc de cercle du sabot 21 et/ou des éléments 110 permet également de focaliser le faisceau ultrason pour qu'il soit dirigé dans l'axe du tube 16 et qu'il ne soit pas dévié vers l'extérieur. La forme en arc de cercle forme une lentille et permet de faire converger le faisceau vers l'axe du tube.

Les sondes 11 sont mues par un moyen 13 configuré pour les entraîner en rotation. Suivant un exemple de réalisation illustré figure 1, ce moyen 13 peut être un moyen manuel comme par exemple une molette de mise en rotation. La molette peut entrainer les sondes 11, par exemple, par l'intermédiaire d'engrenages. Suivant un autre mode de réalisation, le moyen 13 peut être un moyen motorisé comme par exemple un moteur pas à pas.

Le moyen 13 configuré pour entraîner en rotation les sondes ultrasons 11 entraine également un capteur angulaire 14 permettant de mesurer la position angulaire d'au moins une sonde par rapport à une position initiale et délivrer un signal électrique proportionnel à la position angulaire de ladite sonde 11. Suivant un exemple de réalisation le moyen 13 configuré pour entraîner en rotation les sondes ultrasons 11 et le capteur angulaire 14 sont monté sur un même axe.

Suivant un mode de réalisation, le moyen 13 manuel de mise en rotation peut posséder un cran de verrouillage pour matérialiser l'origine du capteur angulaire 14, sa position initiale. Ce cran de verrouillage permet également à l'utilisateur de reconnaitre lorsque les sondes 11 ont effectué un tour complet autour de la soudure 20 lors de mise en rotation de ces dernières.

Le dispositif 10 portable selon l'invention est destiné à être connecté à au moins une unité de traitement 50 et une unité de visualisation 51 pour former un système de contrôle de soudure de tubes métalliques.

Les sondes ultrasons 11 sont du type ^{«} multiéléments ^{»} et sont divisées en plusieurs éléments 110 ou traducteurs ultrasons piézoélectriques élémentaires. Chaque élément 110 de chaque sonde 11 peut être commandé électroniquement de façon individuelle. Cette commande électronique peut être réalisée par l'unité de traitement 50.

Suivant l'invention, les éléments 110 des sondes 11 sont rangés en ligne afin de couvrir au moins la largeur du cordon de soudure 20 à contrôler. Chaque élément 110 de chaque sonde peut être commuté électroniquement par l'unité de traitement. Pour cela, l'unité de traitement peut comprendre un module de commande 501 configuré pour envoyer à chaque élément 110 de la sonde ultrasons, un signal de commutation afin de d'activer ou d'inhiber un ou plusieurs éléments 110 de ladite sonde 11. Cette commutation permet de déplacer spatialement le faisceau ultrason 115 émis par la sonde 11, en activant séquentiellement un élément 110 ou un groupe d'éléments 110 adjacents. La sonde 11 peut ainsi effectuer un balayage linéaire électronique de la largeur du cordon de soudure 20. De façon avantageuse, ce balayage électronique linéaire permet d'éviter un déplacement mécanique de la sonde 11 ou de ces éléments 110. Un balayage électronique étant plus rapide qu'un balayage mécanique, cela permet également des acquisitions de données à grande vitesse.

Suivant un mode de réalisation, chaque élément ultrason 110 est disposé incliné dans le sabot 21 de la sonde 11 de façon à ce que l'angle formé par l'axe du faisceau ultrason 115 émis par un ou plusieurs éléments 110 et l'axe (O, O') passant par le centre des deux parties latérales du logement 120 sensiblement circulaire d'une pince 12 soit différent d'un angle droit. A cet effet, les éléments 110 peuvent, par exemple, être disposés sur un coin 112.

De façon avantageuse, cette disposition permet d'éviter les problèmes de réflexion du faisceau ultrason sur la surface de la soudure à contrôler.

L'angle d'inclinaison des éléments 110 dans le sabot 21 de la sonde 11 est également choisi de façon à générer, dans le matériau de la soudure 20 à contrôler, une onde transversale.

On se réfère à la figure 3. Dans ce mode de réalisation, les éléments 110 de chaque sonde 11 ultrasons sont alignés suivant un axe Δ₁, Δ₂. De façon avantageuse, l'axe d'alignement Δ₁ des éléments 110 de la première sonde 11 et l'axe d'alignement Δ₂ des éléments 110 de la deuxième sonde 11 sont choisis de façon à ce que ces deux axes ne soient pas symétriques par rapport à un axe (O, O') passant par le centre des deux parties latérales du logement (120) sensiblement circulaires d'une pince (12) .

Supposons que ces deux axes d'alignement Δ₁ et Δ₂ soient symétriques par rapport à un axe (O, O') passant par le centre des deux parties latérales du logement (120) sensiblement circulaires d'une pince (12) comme illustré figure 3. Supposons également qu'un défaut 200 soit présent dans le cordon de soudure 20 à analyser et que ce défaut 200 soit orienté suivant une direction parallèle à l'axe du faisceau 115 ultrason d'une sonde, ce défaut 200 ne pourra pas être détecté par la sonde 11. Lorsque la deuxième sonde 11 aura parcouru un demi-tour, elle se retrouvera orientée de la même façon que la sonde précédente lorsqu'elle occupait la même position et ne pourra pas non plus détecter la présence du défaut 200.

De façon différente, si les deux axes d'alignement Δ₁ et Δ₂ ne sont pas symétriques par rapport à l'axe (O, O'), lorsque les sondes 11 parcourent un demi-tour, le faisceau ultrason 115 de la deuxième sonde 11 ne se trouve plus orienté parallèlement à l'axe du défaut 200 et la sonde 11 peut détecter la présence et la forme dudit défaut 200.

Le fait que les deux axes d'alignement ne soient pas symétriques trouve également un intérêt dans le cas de présence d'un effondrement 60 dans le tube dû à la soudure. En cas d'effondrement important, la surface du tube 16 peut être orientée perpendiculairement au faisceau ultrason 115 et provoquer une réflexion parasite entrainant un éblouissement de la sonde 11. Dans cette configuration, la sonde 11 ne peut pas analyser le cordon de soudure. Lorsque les sondes 11 auront parcouru un demi-tour, le faisceau ultrason 115 de la deuxième sonde 11 ne se trouvera plus orientée perpendiculairement à l'effondrement 60 et cette sonde 11 pourra détecter la présence et la forme d'éventuel défaut 200.

Ce même problème peut se retrouver en cas de ressauts dû à des soudures de tubes d'épaisseurs légèrement différentes. Cette situation peut se retrouver par exemple suite à la liaison d'équipements différents, en cas de présence d'embouts ou en cas de soudure de tubes ayant des tolérances de fabrication assez souples.

De façon avantageuse, afin de simplifier les calculs de traitement, les axes d'alignement Δ₁ et Δ₂ des éléments 110 des sondes 11 peuvent être choisis sensiblement parallèles.

Dans certains modes de réalisation, l'angle du faisceau ultrason 115 émis par les sondes 11 peut être modifié électroniquement. A cet effet, à l'émission, l'unité de traitement 50, par exemple par l'intermédiaire d'un module de commande 501, peut transmettre à chaque élément 110 des sondes ultrasons 11, des signaux d'excitation avec une loi de retard afin d'obtenir un déphasage entre les éléments 110. Ceci permet d'obtenir un degré de liberté sur l'angle du faisceau ultrason 115 par la gestion électronique des éléments 110 des sondes 11. L'angle du faisceau ultrason 115 à l'intérieur de la soudure dépendant de l'impédance acoustique du matériau utilisé, ce degré de liberté peut permettre, de façon avantageuse, de contrôler des soudures effectuées sur des tubes de différents matériaux sans avoir à modifier les paramètres du programme de traitement.

De façon analogue, des lois de retard peuvent être appliquées en réception sur les signaux reçus par les différents éléments 110 de la sonde avant leur sommation.

De façon avantageuse, cette possibilité de déflexion électronique du faisceau ultrason peut permettre également, par exemple, de corriger des défauts éventuels de positionnement d'éléments 110 dans la sonde 11.

Suivant un mode de réalisation, l'unité de traitement 50 peut être configurée pour transmettre, par exemple par l'intermédiaire d'un module de commande 501, à chaque élément 110 des sondes 11, un signal d'excitation proportionnel à l'intensité du faisceau ultrasons à émettre.

Dans un mode de réalisation préféré de l'invention, les trois modes précédemment cités sont combinés. Ainsi, l'unité de traitement du système permet de faire varier électroniquement l'angle du faisceau ultrason 115, de faire un balayage électronique du faisceau 115 et permet de faire varier l'intensité dudit faisceau 115.

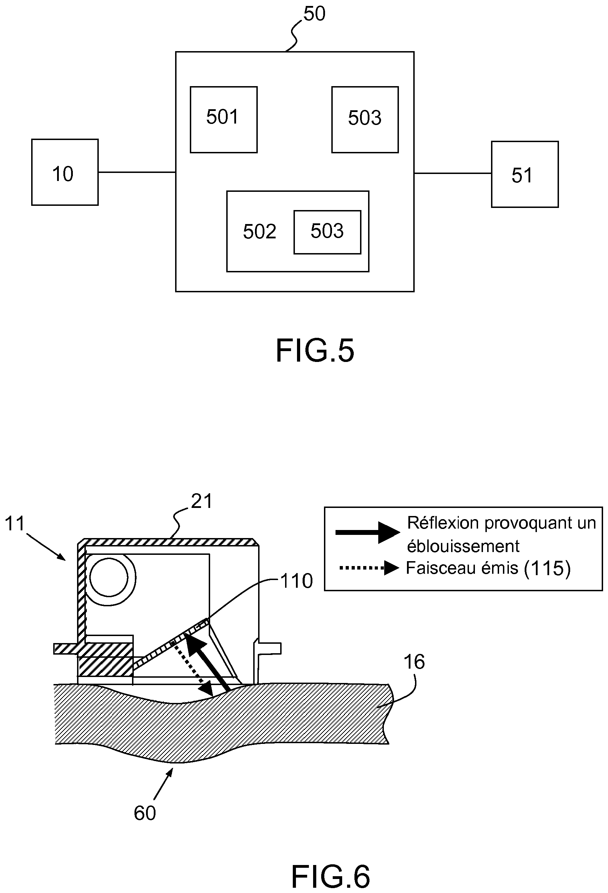

En référence à la figure 5, l'unité de traitement 50 est destinée à gérer le dispositif 10 portable de contrôle de soudure 20. Comme vu précédemment, l'unité de traitement peut gérer les éléments 110 des sondes 11 ultrasons. Pour cela, elle peut comprendre un module de commande 501 configuré notamment pour commuter des éléments 110 de la sonde 11 et/ou pour gérer les signaux d'excitation desdits éléments 110.

Cette unité de traitement 50 a également pour rôle de traiter les signaux issus des sondes 11 ultrasons du dispositif 10. Pour cela l'unité de traitement 50 peut comprendre un module de calcul 502 configuré pour effectuer, par exemple, l'acquisition des données provenant du dispositif 10 de contrôle comme par exemple les signaux de sortie des sondes et/ou du capteur angulaire, et le traitement de ces données. Pour cela l'unité de traitement peut comprendre une ou plusieurs zones mémoires 503. Le traitement des données peut, par exemple, être effectué par un ou plusieurs programmes stockés dans au moins une zone mémoire 503 de l'unité de traitement 50 comme par exemple une zone mémoire 503 du module de calcul 502. Le traitement de données utilisé est un traitement classiquement utilisé dans le domaine de l'imagerie ultrason.

Les données traitées sont ensuite transmises à une unité de visualisation 51 de façon à les afficher sur un moyen d'affichage sous forme d'images représentatives des signaux reçus par les éléments 110 des sondes 11 en fonction de la position angulaire d'au moins une sonde 11.

L'invention a également pour objet un procédé de contrôle de soudure métallique à l'aide du système de contrôle précédemment décrit.

Le procédé comprend une première étape d'enduction des sondes 11 avec un gel couplant afin de faciliter la transmission des ondes des éléments 110 ultrasons vers l'intérieur du matériau du cordon de soudure 20 à contrôler. Une fois les sondes enduites, le dispositif 10 de contrôle est positionner sur le tube 16 au niveau de la soudure à vérifier de façon à mettre en contact la sonde 11 avec le cordon de soudure et de façon à ce que les éléments 110 les sondes couvrent la largeur dudit cordon de soudure 20. Pour cela, le dispositif 10 de contrôle peut comporter un repère matérialisant le centre de la zone de détection des sondes 11 de manière à aligner ce repère avec le centre du cordon de soudure.

Une fois le dispositif 10 positionné, on réalise l'acquisition de la position d'au moins une sonde 11 afin de définir la position initiale de cette dernière. La valeur du signal représentatif de la position initiale du capteur d'angle 14 pourra par exemple être stockée dans une zone mémoire 503 de l'unité de traitement 50.

Dans certains modes de réalisation du dispositif 10 selon l'invention, le capteur 14 pourra avoir une position initiale définie. Les sondes 11 devront donc être amenées à une position particulière correspondant à l'origine dudit capteur angulaire 14. Afin de faciliter le repérage de l'origine du capteur d'angle 14, le moyen 13 peut posséder un cran de verrouillage.

Les sondes sont ensuite mises en rotation à l'aide du moyen 13 et des acquisitions de données et l'enregistrement de ces données sont réalisés simultanément à intervalles réguliers au fur et à mesure du déplacement des sondes 11. Les données relevées correspondent au signal représentatif de la position angulaire d'au moins une sonde 11 par rapport à la position initial du capteur 14 et du signal représentatif des échos captés par les éléments 110 des sondes 11 à cette position angulaire.

Suivant un mode de réalisation les valeurs des signaux mesurées sont stockées dans une zone mémoire de l'unité de traitement pour pouvoir être traitées par exemple par le module de calcul 502 de l'unité de traitement 50. Suivant une variante de réalisation, l'affichage se fait au fur et a mesure de la rotation des sondes 11.

## Revendications

1. Dispositif (10) portable de contrôle de soudure de tubes métalliques de petit diamètre comprenant:
- au moins une pince (12) comportant deux parties latérales comportant chacune un mors, chaque mors présentant un évidement en arc de cercle définissant, une fois la pince (12) fermée, un logement (120) sensiblement circulaire adapté pour recevoir un tube (16) dont la soudure (20) est à contrôler, les deux parties latérales étant agencées l'une par rapport à l'autre de telle façon que les logements sensiblement circulaires (120) formés soient en regard l'un de l'autre,
- au moins deux sondes (11) ultrasons placées entre les deux parties latérales de la pince (12) et montées sur le dispositif de façon à être mobiles en rotation autour de l'axe (O, O') passant par les centre des logements (120) formés par les mors de chacune desdites parties latérales, lesdites sondes (11) étant configurées pour délivrer en sortie des signaux électriques proportionnels aux échos reçus par ces dernières, ledit dispositif étant **caractérisé en ce qu'**il comprend
- un moyen (13) configuré pour entraîner chaque sonde (11) ultrasons en rotation autour de l'axe (O, O') suivant un angle de 360°,
- un capteur angulaire (14) configuré pour délivrer en sortie un signal représentatif de la position angulaire d'au moins une sonde (11) sur la périphérie du tube dont la soudure est à contrôler, cette position étant déterminée par rapport à une position initiale, et **en ce que** lesdites sondes sont disposées selon un angle de 180° l'une par rapport à l'autre, chaque sonde étant une sonde multiéléments comportant une pluralité d'éléments (transducteurs) (110) alignés, configurée pour effectuer un balayage électronique linéaire de la largeur du cordon de soudure (20).

2. Dispositif selon la revendication précédente dans lequel les éléments (110) de la sonde (11) sont configurés pour émettre des faisceaux ultrasons (115) orientés selon un angle différent de 90° par rapport à l'axe (O, O') passant par les centres des logements (120) sensiblement circulaires formés dans les mors des parties latérales de la pince (12).

3. Dispositif (10) selon la revendication précédente dans lequel les éléments (110) de deux sondes ultrasons (11) sont alignées selon deux axes (Δ₁, Δ₂) orientés de façon à ce que lesdits axes (Δ₁, Δ₂) ne soient pas symétrique par rapport à l'axe (O, O') passant par le centre des deux parties latérales du logement (120) sensiblement circulaire d'une pince (12).

4. Dispositif (10) selon une des revendications précédentes dans lequel chaque élément (110) des sondes (11) ultrasons sont commandables individuellement.

5. Dispositif (10) selon une des revendications précédentes dans lequel le moyen (13) configuré pour entraîner en rotation les sondes (11) ultrasons est un moyen manuel.

6. Dispositif (10) selon une des revendications 1 à 4 dans lequel le moyen (13) configuré pour entraîner en rotation les sondes (11) ultrasons est un moyen motorisé.

7. Système de contrôle de soudure (20) de tubes (16) métalliques **caractérisé en ce qu'**il comprend un dispositif (10) de contrôle de soudure (20) de tubes (16) métalliques selon une des revendications précédentes, une unité de traitement (50) et une unité de visualisation (51), ladite unité de traitement (50) étant configurée pour émettre des signaux en direction de chaque sonde (11) ultrasons dudit dispositif (10) de contrôle de soudure de façon à commander chaque élément (110) desdites sondes (11) et recevoir des signaux proportionnels aux échos reçus par chaque élément (110) desdites sondes (11), l'unité de visualisation (51) étant configurée pour représenter les signaux reçus des sondes (11) après traitement sous forme d'images en fonction de la position angulaire d'au moins une sonde sur ladite unité de visualisation (51).

8. Système selon la revendication précédente dans lequel l'unité de traitement (50) est programmée pour transmettre, à chaque élément (110) des sondes (11), des signaux de commutation de façon à alimenter séquentiellement un groupe d'éléments (110) adjacents afin de balayer linéairement la largeur du cordon de soudure (20) à contrôler.

9. Système selon une des revendications 7 ou 8 dans lequel l'unité de traitement (50) est configurée pour transmettre, à chaque élément (110) des sondes (11), des signaux de commande avec une loi de retard de façon à dévier électroniquement le faisceau ultrason émis par lesdites sondes (11).

10. Système selon une des revendications 7 à 9 dans lequel l'unité de traitement (50) est configurée pour transmettre, à chaque élément (110) des sondes, un signal proportionnel à l'intensité du faisceau ultrasons à émettre par lesdites sondes (11).

11. Procédé de contrôle de soudure de tubes métalliques mettant en œuvre le système de contrôle de soudure selon une des revendications 7 à 10 **caractérisé en ce qu'**il comprend :
- Une étape d'enduction des sondes (11) de gel couplant,
- Une étape de positionnement du dispositif (10) de contrôle sur le tube (16), au niveau de la soudure (20) à contrôler de façon à aligner les sondes (11) sur ladite soudure (20),
- Une étape d'acquisition, dans une zone mémoire de l'unité de traitement, du signal représentatif de la position angulaire initiale d'au moins une sonde (11),
- Une étape de mise en rotation des sondes (11) autour de la soudure (20) à contrôler et, à intervalle régulier, de mesure et d'enregistrement simultané, dans une zone mémoire (503) de l'unité de traitement (50), du signal représentatif de la position angulaire d'au moins une sonde (11) et du signal représentatif des échos captés par les éléments (110) des sondes (11),
- Une étape d'affichage, sur l'unité de visualisation (51), d'images représentatives des signaux reçus par les éléments (110) des sondes (11) en fonction de la position angulaire de ces dernières.

## Patentansprüche

1. Tragbare Vorrichtung (10) zum Prüfen der Schweißnähte von Metallrohren mit kleinem Durchmesser, die Folgendes umfasst:
- mindestens eine Klemme (12) mit zwei Seitenteilen, die jeweils eine Klemmbacke aufweisen, wobei jede Klemmbacke eine kreisbogenförmige Aussparung aufweist, die nach dem Schließen der Klemme (12) eine im Wesentlichen kreisförmige Aufnahme (120) zum Aufnehmen eines Rohrs (16) definiert, dessen Schweißnaht (20) geprüft werden soll, wobei die beiden Seitenteile so zueinander angeordnet sind, dass die gebildeten im Wesentlichen kreisförmigen Aufnahmen (120) einander gegenüberliegen,
- mindestens zwei Ultraschallsonden (11), die zwischen den beiden Seitenteilen der Klemme (12) angeordnet und an der Vorrichtung montiert sind, so dass sie um die Achse (O, O') drehbar sind, die durch die Mitten der von den Klemmbacken jedes der Seitenteile gebildeten Aussparungen (120) verläuft,
wobei die Sonden (11) konfiguriert sind, um elektrische Signale proportional zu den von den Sonden empfangenen Echos auszugeben, wobei die Vorrichtung **dadurch gekennzeichnet ist, dass** sie Folgendes umfasst:
- ein Mittel (13), das konfiguriert ist, um jede Ultraschallsonde (11) um die Achse (O, O') in einem Winkel von 360° zu drehen,
- einen Winkelsensor (14), der konfiguriert ist, um ein Signal auszugeben, das für die Winkelposition mindestens einer Sonde (11) auf dem Umfang des Rohrs, dessen Schweißnaht geprüft werden soll, repräsentativ ist, wobei diese Position in Bezug auf eine Ausgangsposition bestimmt wird,
und dadurch, dass die Sonden in einem Winkel von 180° zueinander angeordnet sind, wobei jede Sonde eine Mehrelementensonde mit einer Mehrzahl von ausgerichteten Elementen (Wandlern) (110) ist, die konfiguriert sind, um eine lineare elektronische Abtastung der Breite der Schweißnaht (20) zu bewirken.

2. Vorrichtung nach dem vorherigen Anspruch, wobei die Elemente (110) der Sonde (11) konfiguriert sind, um Ultraschallstrahlen (115) zu emittieren, die in einem Winkel von nicht 90° in Bezug auf die Achse (O, O') orientiert sind, die durch die Mitten der im Wesentlichen kreisförmigen Aufnahmen (120) verläuft, die in den Klemmbacken der Seitenteile der Klemme (12) ausgebildet sind.

3. Vorrichtung (10) nach dem vorherigen Anspruch, wobei die Elemente (110) von zwei Ultraschallsonden (11) gemäß zwei Achsen (Δ₁, Δ₂) ausgerichtet sind, die so orientiert sind, dass die Achsen (Δ₁, Δ₂) nicht symmetrisch in Bezug auf die Achse (O, O') sind, die durch die Mitte der beiden Seitenteile der im Wesentlichen kreisförmigen Aufnahme (120) einer Klemme (12) verläuft.

4. Vorrichtung (10) nach einem der vorherigen Ansprüche, wobei jedes Element (110) der Ultraschallsonden (11) einzeln ansteuerbar ist.

5. Vorrichtung (10) nach einem der vorherigen Ansprüche, wobei das zum Drehen der Ultraschallsonden (11) konfigurierte Mittel (13) ein manuelles Mittel ist.

6. Vorrichtung (10) nach einem der Ansprüche 1 bis 4, wobei das zum Drehen der Ultraschallsonden (11) konfigurierte Mittel (13) ein motorisiertes Mittel ist.

7. System zum Prüfen der Schweißnaht (20) von Metallrohren (16), **dadurch gekennzeichnet, dass** es eine Vorrichtung (10) zum Prüfen der Schweißnaht (20) von Metallrohren (16) nach einem der vorherigen Ansprüche, eine Verarbeitungseinheit (50) und eine Anzeigeeinheit (51) umfasst, wobei die Verarbeitungseinheit (50) konfiguriert ist, um Signale in Richtung jeder Ultraschallsonde (11) der Schweißnahtprüfvorrichtung (10) zu emittieren, um jedes Element (110) der Sonden (11) zu steuern, und um Signale proportional zu den von jedem Element (110) der Sonden (11) empfangenen Echos zu empfangen, wobei die Anzeigeeinheit (51) konfiguriert ist, um die von den Sonden (11) empfangenen Signale nach der Verarbeitung in Form von Bildern in Abhängigkeit von der Winkelposition von mindestens einer Sonde auf der Anzeigeeinheit (51) darzustellen.

8. System nach dem vorherigen Anspruch, wobei die Verarbeitungseinheit (50) programmiert ist, um, an jedes Element (110) der Sonden (11), Schaltsignale zu senden, um eine Gruppe benachbarter Elemente (110) sequentiell zu versorgen, um die Breite der zu prüfenden Schweißnaht (20) linear abzutasten.

9. System nach einem der Ansprüche 7 oder 8, wobei die Verarbeitungseinheit (50) konfiguriert ist, um, zu jedem Element (110) der Sonden (11), Steuersignale mit einem Verzögerungsgesetz zu senden, um den von den Sonden (11) emittierten Ultraschallstrahl elektronisch abzulenken.

10. System nach einem der Ansprüche 7 bis 9, wobei die Verarbeitungseinheit (50) konfiguriert ist, um, an jedes Element (110) der Sonden, ein Signal proportional zur Intensität des von den Sonden (11) zu emittierenden Ultraschallstrahls zu senden.

11. Verfahren zum Prüfen der Schweißnaht von Metallrohren unter Verwendung des Schweißnahtprüfsystems nach einem der Ansprüche 7 bis 10, **dadurch gekennzeichnet, dass** es Folgendes umfasst:
- einen Schritt des Beschichtens der Sonden (11) mit Kopplungsgel,
- einen Schritt des Positionierens der Prüfvorrichtung (10) auf dem Rohr (16) an der zu prüfenden Schweißnaht (20), um die Sonden (11) auf der Schweißnaht (20) auszurichten,
- einen Schritt des Erfassens, in einer Speicherzone der Verarbeitungseinheit, des für die anfängliche Winkelposition mindestens einer Sonde (11) repräsentativen Signals,
- einen Schritt des Drehens der Sonden (11) um die zu überprüfende Schweißnaht (20) und, in regelmäßigen Abständen, des Messens und gleichzeitigen Aufzeichnens, in einer Speicherzone (503) der Verarbeitungseinheit (50) des für die Winkelposition mindestens einer Sonde (11) repräsentativen Signals und des für die von den Elementen (110) der Sonden (11) erfassten Echos repräsentativen Signals;
- einen Schritt des Anzeigens, auf der Anzeigeeinheit (51), von Bildern, die für die von den Elementen (110) der Sonden (11) empfangenen Signale in Abhängigkeit von der Winkelposition der letzteren repräsentativ sind.

## Claims

1. A portable device (10) for inspecting a weld bead of small-diameter metal tubes, comprising:
- at least one clamp (12) having two lateral portions each having a jaw, each jaw including a circularly arcuate void defining, once the clamp (12) has been closed, a substantially circular housing (120) suitable for receiving a tube (16), the weld (20) of which is to be inspected; the two lateral portions being arranged in relation to each other such that the formed substantially circular housings (120) face each other,
- at least two ultrasound probes (11) placed between the two lateral portions of the clamp (12) and mounted to the device so as to be movable about the axis (O, O') passing through the centres of the housings (120) formed by the jaws of each of the lateral portions,
said probes (11) being configured to deliver as output electrical signals proportional to the echoes received by said probes; the device being **characterized in that** it comprises
- a means (13) configured to drive each ultrasound probe (11) to rotate about the axis (O, O') at an angle of 360°,
- an angular sensor (14) configured to deliver as output a signal representative of the angular position of at least one probe (11) on the circumference of the tube, of which the weld is to be inspected, this position being determined relative to an initial position,
and **in that** said probes are arranged at an angle of 180° in relation to each other, each probe being a multielement probe having a plurality of aligned elements (transducers) (110), configured to perform a linear electrical scan of the width of the weld bead (20).

2. The device according to the preceding claim, in which the elements (110) of the probe (11) are configured to emit ultrasound beams (115) that are oriented at an angle different from 90° to the axis (O, O') passing through the centres of the substantially circular housings (120) formed in the jaws of the lateral portions of the clamp (12).

3. The device (10) according to the preceding claim, in which the elements (110) of two ultrasound probes (11) are aligned along two axes (Δ₁, Δ₂) that are oriented so that said axes (Δ₁, Δ₂) are not symmetric about the axis (O, O') passing through the centre of the two lateral portions of the substantially circular housing (120) of a clamp (12).

4. The device (10) according to one of the preceding claims, in which each element (110) of the ultrasound probes (11) is individually controllable.

5. The device (10) according to one of the preceding claims, in which the means (13) configured to drive the ultrasound probes (11) to rotate is a manual means.

6. The device (10) according to one of claims 1 to 4, in which the means (13) configured to drive the ultrasound probes (11) to rotate is a motorized means.

7. A system for inspecting a weld bead (20) of metal tubes (16), **characterized in that** it comprises a device (10) for inspecting the weld (20) of metal tubes (16) according to one of the preceding claims, a processing unit (50) and a viewing unit (51), said processing unit (50) being configured to emit signals in the direction of each ultrasound probe (11) of said weld inspecting device (10) so as to control each element (110) of said probes (11) and to receive signals proportional to the echoes received by each element (110) of said probes (11), the viewing unit (51) being configured to represent, on said viewing unit (51), the signals received from the probes (11) after processing in the form of images as a function of the angular position of at least one probe.

8. The system according to the preceding claim, in which the processing unit (50) is programmed to transmit, to each element (110) of the probes (11), switching signals so as to sequentially power a group of adjacent elements (110) to linearly scan the width of the weld bead (20) to be inspected.

9. The system according to one of claims 7 or 8, in which the processing unit (50) is configured to transmit, to each element (110) of the probes (11), control signals respecting a delay law so as to electronically deviate the ultrasound beam emitted by said probes (11).

10. The system according to one of claims 7 to 9, in which the processing unit (50) is configured to transmit, to each element (110) of the probes, a signal proportional to the intensity of the ultrasound beam to be emitted by said probes (11).

11. A method for inspecting the weld bead of metal tubes implementing the weld inspecting system according to one of claims 7 to 10, **characterized in that** it comprises :
- a step of coating the probes (11) with coupling gel;
- a step of positioning the inspecting device (10) on the tube (16), at the weld bead (20) to be inspected so as to align the probes (11) with said weld bead (20);
- a step of acquiring, in a memory zone of the processing unit, the signal representative of the initial angular position of at least one probe (11);
- a step of rotating the probes (11) around the weld bead (20) to be inspected and, at regular intervals, of measuring and concurrent recording, in a memory zone (503) of the processing unit (50), the signal representative of the angular position of at least one probe (11) and the signal representative of the echoes captured by the elements (110) of the probes (11);
- a step of displaying, on the viewing unit (51), images representative of the signals received by the elements (110) of the probes (11) as a function of the angular position of the latter.
